# EUROPEAN PATENT SPECIFICATION

(11) **EP 1 561 653 B1**
(45) Date of publication and mention of the grant of the patent: **03.01.2007**
(21) Application number: 05002514.7
(22) Date of filing: 07.02.2005
(51) Int. Cl.: B60R 25/04

(54) **Antitheft method and device for vehicle**
Verfahren und Vorrichtung zur Diebstahlsicherung
Procédé et dispositif antivol pour véhicule

(30) Priority: 09.02.2004 JP 2004031815; 26.01.2005 US 905912
(43) Date of publication of application: 10.08.2005
(73) Proprietor: Kabushiki Kaisha MORIC, Shuchi-gun, Shizuoka-ken (JP)
(72) Inventor: Shii, Takahiro, Shuchi-gun Shizuoka-ken (JP)
(74) Representative: TBK-Patent

(56) References cited:
- EP-A- 0 888 940
- EP-A- 1 081 002
- WO-A-89/07815
- US-A- 4 690 240

## Description

### BACKGROUND OF THE INVENTION

The present invention relates to an antitheft method for a vehicle having an immobilizer which prohibits the engine from starting when a key with an ID code, which does not match an ID code previously registered in a controller mounted on the vehicle is used and to a method and device for providing an antitheft operation in the event a person attempts to defeat the theft by replacement of the controller.

Typical antitheft devices for vehicle as shown the US Patents 6,525,433 and 6683391 and co-pending US Application US 2004/0145449 A, Serial Number 10/707689, filed January 5, 2004, of the assignee hereof and comprises a key cylinder and a controller on a vehicle body, that control an ignition immobilizer. EP-A-1 081 002 discloses an antitheft method and device according to the preamble of claims 1 and 3. The operation is such that when a key having a built-in transponder is inserted into the key cylinder, the controller performs an ID check through a circuit that communicates with the transponder via an antenna located in the vicinity of the key cylinder to read an ID code of the key. The immobilizer only permits the engine to start if the ID code matches the one previously registered in the controller.

In accordance with the disclosure thereof backup power is constantly supplied to the immobilizer generally through the vehicle battery even when the vehicle is not running. Thus even when the main switch is off the immobilizer is kept in an alert mode for theft through illegal means.

When a vehicle is equipped with such an antitheft device, the engine cannot be started without a key with an ID code which matches the ID code previously registered in the controller. Thus, the vehicle cannot be illegally driven by someone other than the owner of the vehicle and is prevented from being stolen.

However, such an antitheft device is commercially available and the coupler for coupling the device and the on-board battery is a standardized product. Therefore a prospective thief can steal the vehicle by removing the entire antitheft device and replacing it with another device that matches a key possessed by the prospective thief.

One conventional preventive measure against such theft of a vehicle is to make it difficult to steal the vehicle by complicating the structure in which an antitheft device is attached to the vehicle, for example, by increasing the number or types of attaching devices or encasing the device, so that it cannot be removed quickly. However these remedies add to the cost of both assembly and servicing and also can be defeated by skilled thieves.

Therefore it is a principal object of this invention to provide an easily attached, serviced and removed system and method of antitheft protection that nevertheless makes it difficult to remove the device within a short period of time.

It is a further an object of the invention is to provide antitheft method and device for a vehicle which does not complicate the structure of the attachment but nevertheless prevents theft.

### SUMMARY OF THE INVENTION

The above objects are achieved by the features of the independent claims.

A first feature of the invention is adapted to be embodied in an antitheft method for a vehicle equipped with an immobilizer having a controller which transmits an ignition prohibition canceling signal to an ignition control unit of an engine when an ID code of a transponder built in a key matches an ID code previously registered in the controller on the vehicle. The method comprises the steps of maintaining the ignition control unit in an ignition prohibition mode for a predetermined period of time after the immobilizer has been disconnected from a power source and is subsequently connected to a backup power source.

Another feature of the invention is adapted to be embodied in an antitheft device for a vehicle having an engine comprising an immobilizer having a controller that checks an ID code of a transponder built in a key against an ID code previously registered in the controller. A timer circuit counts the connection time that has elapsed after the immobilizer has been disconnected from a power source and is connected to a backup power source for prohibiting starting of said engine when the connection time is shorter than a predetermined period of time.

### BRIEF DESCRIPTION OF THE DRAWINGS

FIG. 1 is a schematic view illustrating the components of an embodiment of the invention.

FIG. 2 is a block diagram illustrating the embodiment

FIG. 3 is a circuit diagram of the antitheft device.

FIG. 4 is a flowchart illustrating the operation of the device and its method.

### DETAILED DESCRIPTION

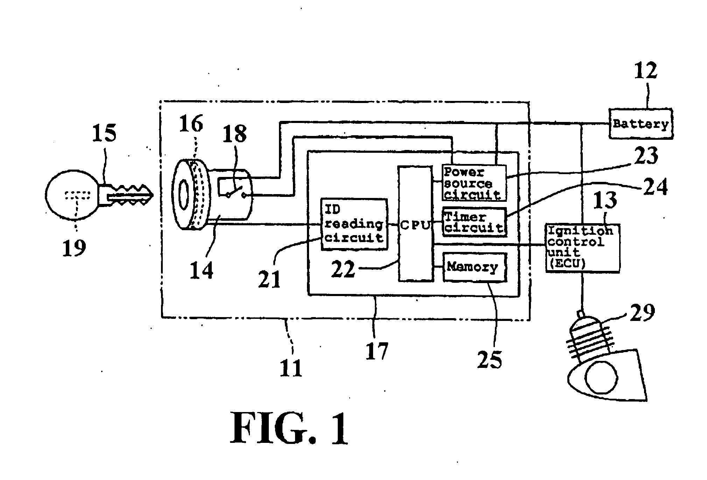

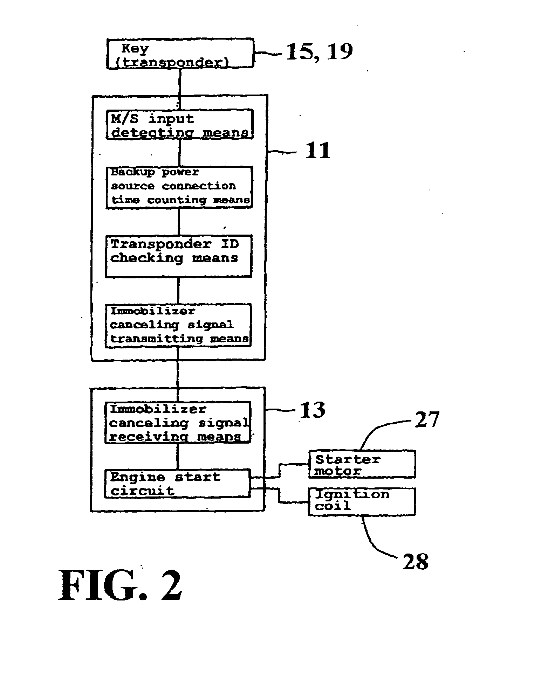

Referring now to the drawings and initially to FIGS. 1 and 2 these illustrate the configuration of an antitheft device of the present invention. The antitheft device of the present invention is comprised of a vehicle mounted immobilizer 11 connected to an on-board battery 12 with a voltage of 12V, for example, an ignition control unit (ECU) 13, a key cylinder assembly, indicated generally at 14, and a cooperating key 15. The immobilizer 11 has an antenna 16, generally incorporated in the body of the key cylinder 14, and a controller, indicated generally at 17. The antenna 16 and the controller 17 may be integrated with each other.

A main switch 18 is built in a key cylinder 14. When the appropriate key 15 is inserted into the key cylinder 14 and operated, the main switch 18 is turned on or off. In addition to its keying, if employed, the key 15 has a built-in transponder 19 in which a unique ID code is recorded.

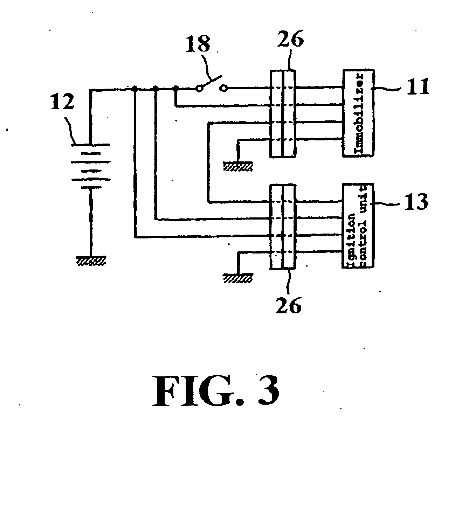

The controller 17 is formed on a printed circuit board and has an ID reading circuit 21, a CPU 22, a power source circuit 23, a timer circuit 24 and a memory 25. The controller 17 is connected to the antenna 16 and the ignition control unit , and has a function of communicating with the transponder 19 built in the key 15 and the ignition control unit 13 of an engine 12. The ignition control unit may be incorporated in the controller 17. The battery 12 is connected to the immobilizer 11 via a coupler 26 (FIG. 3) as described later, and supplies backup power with a low voltage (5V, for example) to keep the controller 17 operational regardless of the on or off condition of the main switch 18.

When the key 15 is operated and the main switch 18 is turned on, the battery 12 is connected to load components such as lights and an ignition circuit (not shown), and an ID code signal is transmitted from the key 15 to the controller 17 via the antenna 16 of the key cylinder 14.

The timer circuit 24 counts the connection time, that is, the amount of time which has elapsed after the last initial connection of the immobilizer 11 to the battery 12 (the amount of time from the point at which the backup power starts to be supplied from the battery 12 by connecting the coupler 26). Since backup power is kept supplied to the immobilizer 11 even when the main switch is off, the timer circuit 24 can count the connection time after the immobilizer 11 has been attached.

The immobilizer 11 is programmed not to read the transponder 19 even if the key 15 is turned to the on position until a predetermined period of time elapses. Each of the immobilizer 11 and the ignition control unit 13 is connected to the on-board battery 12 via a respective coupler 26 as shown in FIG. 3, and the counting of the connection time is automatically started when the immobilizer 1 is connected to the coupler 26. Although shown separately in FIG. 3, the couplers 26 may be contained in a common body. Thus, the connection time cannot be changed illegally from the outside.

The ignition control unit 13 may be also counted the connection time and controlled not to be activated until a predetermined period of connection time elapses as in the case with the immobilizer 11.

The ID code recorded in the transponder 19 of the key 15 is recorded in the memory 25, and the CPU 22 determines whether the ID code, read by the ID reading circuit 21 when the key 15 is inserted into the key cylinder 14, matches the ID code recorded in the memory 25. When the ID codes match with each other, an ignition prohibition canceling signal is transmitted from the CPU 22 to the ignition control unit 13 to activate the ignition control unit 13 , allowing a starter motor 27 and ignition coil 28 of the of an associated engine 29 to start.

When the ID codes do not match with each other, the ignition control unit 13 is maintained in an ignition prohibition mode and the engine 29 cannot be started. At this time, an alarm or indication lamp indicates the improper operation.

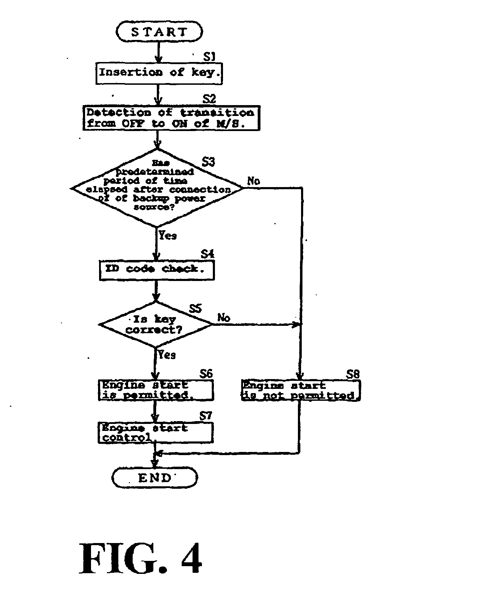

The implementation procedure of the present invention will be described with reference to FIG. 4. When the key 15 is inserted into the key cylinder 14 at the step S1) and turned to the on position, the main switch 18 is turned on and the controller 17 detects this at the step S2. The controller 17 then determines at the step S3 whether a predetermined period of time has elapsed after the connection of the immobilizer 11 to the on-board battery 12 via the coupler 26. If the connection time is determined to be insufficient, jumps to the step S8 and no further operations are performed and the engine 29 cannot be started.

If, however, the predetermined period of time has elapsed, the program moves to the step S4 where an ID code check is performed. Radio waves are transmitted from the battery 12 to the key 15 via the antenna 16 to supply electric power to the transponder 19 to perform the ID code check. When a predetermined amount of electric power is charged in the transponder 19, the unique ID code of the transponder 19 is transmitted to the controller 17 via the antenna 16. The controller 17 reads the ID code with the ID reading circuit 21 and transmits it to the CPU 22, where the read ID code is compared with the ID code registered in the memory 25 to determine whether they match with each other, that is, whether the key is the correct key for the controller 1 7 at the step S5.

If the key 14 is determined to be the correct key, a canceling signal for canceling the start prohibition mode of the engine 29 and permitting the engine 29 to start is transmitted to the ignition control unit at the step S6. Then at the step S7 the ignition control unit starts the engine 29.

On the other hand the code is different from the previously registered ID code, the key is determined to be an incorrect key and the engine 29 is maintained in the start prohibition mode by jumping to the step S8. Then, the operation is completed.

Alternatively, the step S3 may be programmed to be performed after the step S5. That is, the determination of the connection time of the backup power source may be conducted after the ID check.

As described above, the vehicle cannot be illegally driven by someone other than the owner of the vehicle having the correct key 15. Even if the immobilizer 11 mounted on the vehicle is illegally removed and replaced with a new one, the vehicle cannot be driven within a short period of time due to the necessity of the time set at step S3 is reached. Thus, it is very difficult to steal the vehicle during temporary parking.

When the key 15 is turned to the off position to turn off the main switch and then removed from the key cylinder 14 after the vehicle has been stopped, the engine 29 is stopped but backup power is kept supplied to the controller 1 7.

Thus from the foregoing description it should be readily apparent that the described constructions and methods are very effective and difficult to defeat vehicle antitheft protection is provided without interfering with the simplicity of instillation and servicing as well as reducing the cost thereof. Of course those skilled in the art will readily understand that the described embodiments are only exemplary of forms that the invention may take and that various changes and modifications may be made without departing from the spirit and scope of the invention, as defined by the appended claims.

## Claims

1. An antitheft method for a vehicle equipped with an immobilizer (11) having a controller (17) which transmits an ignition prohibition canceling signal to an ignition control unit (13) of an engine when an ID code of a transponder (19) built in a key (15) matches an ID code previously registered in the controller (17) on the vehicle, said method **characterised by** comprising the steps of maintaining the ignition control unit (13) in an ignition prohibition mode for a predetermined period of time after the immobilizer (11) has been disconnected from a power source and is subsequently connected to a backup power source.

2. The antitheft method for a vehicle of Claim 1, further comprising the step of determining the connection time of the backup power source after a main switch has been turned on with the key (15) and before or after the ID code of the transponder (19) is checked and canceling the ignition prohibition canceling signal when the connection time is a predetermined period of time or longer and the ID codes match with each other.

3. An antitheft device for a vehicle having an engine comprising an immobilizer (11) having a controller (17) that checks an ID code of a transponder (19) built in a key (15) against an ID code previously registered in the controller (17), **characterised by** comprising a timer circuit for counting the connection time that has elapsed after said immobilizer (11) has been disconnected from a power source and connected to a backup power source and prohibiting starting of said engine when the connection time is shorter than a predetermined period of time.

4. The antitheft device for a vehicle of Claim 3, wherein the backup power is supplied from an on-board battery connected to the immobilizer (11) via a coupler, and the counting of the connection time is started when the immobilizer (11) is first connected to the battery via the coupler.

5. The antitheft device for a vehicle of Claim 4, wherein the vehicle has an ignition system and the controller (17) transmits an ignition prohibiting signal to an ignition control unit of the engine for prohibiting starting engine.

## Patentansprüche

1. Verfahren zur Diebstahlsicherung für ein Fahrzeug, das mit einer Wegfahrsperre (11) ausgestattet ist, die eine Steuerung (17) hat, die ein Zündungsverhinderungsaufhebungssignal an eine Zündungssteuereinheit (13) eines Motors überträgt, wenn ein ID-Code eines in einem Schlüssel (15) eingebauten Transponders (19) mit einem zuvor in der Steuerung (17) an dem Fahrzeug registrierten ID-Code zusammenpasst, **dadurch gekennzeichnet, dass** es die Schritte zum Beibehalten der Zündungssteuereinheit (13) in einem Zündungsverhinderungsmodus für eine vorbestimmte Zeitperiode aufweist, nachdem die Wegfahrsperre (11) von einer Energiequelle abgetrennt wurde und anschließend mit einer Ersatzenergiequelle verbunden wird.

2. Verfahren zur Diebstahlsicherung für ein Fahrzeug gemäß Anspruch 1, weiterhin mit dem Schritt zum Bestimmen der Verbindungszeit der Ersatzenergiequelle, nachdem ein Hauptschalter mit dem Schlüssel (15) eingeschaltet wurde, und bevor oder nachdem der ID-Code des Transponders (19) geprüft wird, und Aufheben des Zündungsverhinderungsaufhebungssignals, wenn die Verbindungszeit gleich oder größer einer vorbestimmten Zeitperiode ist und die ID-Codes miteinander zusammenpassen.

3. Vorrichtung zur Diebstahlsicherung für ein Fahrzeug, das einen Motor hat, die eine Wegfahrsperre (11) mit einer Steuerung (17) umfasst, die einen ID-Code eines in einem Schlüssel (15) eingebauten Transponders (19) mit einem zuvor in der Steuerung (17) registrierten ID-Code vergleicht, **dadurch gekennzeichnet, dass** sie eine Zeitzählschaltung zum Abzählen der Verbindungszeit aufweist, die abgelaufen ist, nachdem die Wegfahrsperre (11) von einer Energiequelle abgetrennt wurde und mit einer Ersatzenergiequelle verbunden wird, und das Verhindern eines Startens des Motors, wenn die Verbindungszeit kürzer als eine vorbestimmte Zeitperiode ist.

4. Vorrichtung zur Diebstahlsicherung für ein Fahrzeug gemäß Anspruch 3, wobei die Ersatzenergie von einer fahrzeugeigenen Batterie, die mit der Wegfahrsperre (11) über ein Verbindungsstück verbunden ist, eingespeist wird und das Abzählen der Verbindungszeit gestartet wird, sobald die Wegfahrsperre (11) mit der Batterie über das Verbindungsstück verbunden wird.

5. Vorrichtung zur Diebstahlsicherung für ein Fahrzeug gemäß Anspruch 4, wobei das Fahrzeug ein Zündungssystem hat und die Steuerung (17) zum Verhindern des Startens des Motors ein Zündungsverhinderungssignal zu einer Zündungssteuereinheit des Motors überträgt.

## Revendications

1. Procédé antivol pour un véhicule équipé d'un dispositif anti-démarrage (11) ayant un dispositif de commande (17) qui émet un signal d'annulation d'interdiction d'allumage à une unité de commande d'allumage (13) d'un moteur lorsque un code ID d'un transpondeur (19) intégré dans une clé (15) coïncide avec un code ID préalablement enregistré dans le dispositif de commande (17) sur le véhicule, ledit procédé **caractérisé par** le fait de comprendre les étapes de maintenir l'unité de commande d'allumage (13) dans un mode d'interdiction d'allumage pendant une période de temps prédéterminée après que le dispositif anti-démarrage (11) a été déconnecté d'une source de puissance et est connecté par la suite à une source de puissance de secours.

2. Procédé antivol pour un véhicule de la revendication 1, comprenant en plus l'étape consistant à déterminer le temps de connexion de la source de puissance de secours après qu'un commutateur principal a été mis en marche avec la clé (15) et avant ou après que le code ID du transpondeur (19) soit vérifié et annuler le signal d'annulation d'interdiction d'allumage lorsque le temps de connexion est une période de temps prédéterminée ou une période de temps plus longue et les codes ID coïncident l'un avec l'autre.

3. Dispositif antivol pour un véhicule ayant un moteur comprenant un dispositif anti-démarrage (11) ayant un dispositif de commande (17) qui vérifie un code ID d'un transpondeur (19) intégré dans une clé (15) par rapport à un code ID préalablement enregistré dans le dispositif de commande (17), **caractérisé par** le fait de comprendre un circuit de minuterie pour compter le temps de connexion qui s'est écoulé après que ledit dispositif anti-démarrage (11) a été déconnecté d'une source de puissance et connecté à une source de puissance de secours et interdire un démarrage dudit moteur lorsque le temps de connexion est plus court qu'une période de temps prédéterminée.

4. Dispositif antivol pour un véhicule de la revendication 3, dans lequel la puissance de secours est alimentée à partir d'une batterie embarquée connectée au dispositif anti-démarrage (11) à travers un coupleur, et le comptage du temps de connexion est démarré dès que le dispositif anti-démarrage (11) est d'abord connecté à la batterie à travers le coupleur.

5. Dispositif antivol pour un véhicule de la revendication 4, dans lequel le véhicule a un système d'allumage et le dispositif de commande (17) émet un signal d'interdiction d'allumage à une unité de commande d'allumage du moteur pour interdire un démarrage du moteur.
